(19) Europäisches Patentamt
European Patent Office
Office européen des brevets

(11)  EP 2 241 581 B1

(12)  **EUROPEAN PATENT SPECIFICATION**

(45) Date of publication and mention
of the grant of the patent:
**30.04.2014  Bulletin 2014/18**

(51) Int Cl.:
***C08F 14/26*** *(2006.01)*      ***C08F 214/26*** *(2006.01)*
***C08F 214/18*** *(2006.01)*

(21) Application number: **09706036.2**

(22) Date of filing: **30.01.2009**

(86) International application number:
**PCT/JP2009/051621**

(87) International publication number:
**WO 2009/096544 (06.08.2009 Gazette 2009/32)**

(54) **THERMOPLASTIC FLUORORESIN AND METHOD FOR PRODUCING THE SAME**

THERMOPLASTISCHES FLUORHARZ UND VERFAHREN ZU SEINER HERSTELLUNG

FLUORORÉSINE THERMOPLASTIQUE ET PROCÉDÉ DE PRODUCTION CORRESPONDANT

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **01.02.2008  JP 2008022971**

(43) Date of publication of application:
**20.10.2010  Bulletin 2010/42**

(73) Proprietor: **Asahi Glass Company, Limited Chiyoda-ku Tokyo 100-8405 (JP)**

(72) Inventors:
• **FUKUNAGA, Shintaro Tokyo 100-8405 (JP)**

• **FUNAKI, Atsushi Tokyo 100-8405 (JP)**

(74) Representative: **Müller-Boré & Partner Patentanwälte PartG mbB Friedenheimer Brücke 21 80639 München (DE)**

(56) References cited:
**EP-A1- 1 842 863      EP-A1- 2 090 595**
**JP-A- 1 092 250      JP-A- 1 292 013**
**JP-A- 7 173 446      JP-A- 59 030 847**
**JP-A- 2002 012 626    JP-T- 2006 521 453**
**JP-U- 64 043 514**

EP 2 241 581 B1

**Description**

The present invention relates to a thermoplastic fluororesin and its production process. More particularly, it relates to a thermoplastic fluororesin excellent in blow moldability and inflation moldability, and its production process.

A thermoplastic fluororesin such as a tetrafluoroethylene-hexafluoropropylene copolymer or an ethylene-tetrafluoroethylene copolymer, is excellent in thermal resistance, chemical resistance, weather resistance, and thus is widely used as a material for tubes, pipes, coatings, wire-coverings, films, horticultural covering films.

However, the thermoplastic fluororesin has had a problem such that during the blow molding, when a cylindrically shaped resin (hereinafter referred to as a parison) in a softened state in the mold is pulled downward by its own weight, an upper portion of the parison stretches so that the wall thickness of that portion becomes thin, and the wall thickness of the molded product becomes non-uniform. Such reduction of the wall thickness becomes distinct especially in blow molding a large sized product. Further, in inflation molding, the thickness of a film to be formed was likely to be non-uniform.

In order to prevent non-uniformity in the wall thickness of a parison or to make the thickness of the film to be uniform, it is effective to increase the melt tension of the thermoplastic fluororesin. If the molecular weight of the thermoplastic fluororesin is increased, the melt tension can be made high. However, the melt viscosity of the thermoplastic fluororesin at the time of molding becomes high, whereby there has been a problem such that the moldability of the thermoplastic fluororesin at the time of extruding a parison tends to be low, and the productivity tends to be low.

A polyethylene is known to have a high melt tension and a low melt viscosity when it has a long chain branched structure. Patent Document 1 reports that a copolymer of tetrafluoroethylene with a monomer having at least two double bonds, is excellent in blow moldability.

Further, Patent Document 2 discloses two-stage polymerization employing a monomer having a double bond and a peroxy bond in its molecule. In order that the above copolymer has flexibility, a monomer to form an elastic copolymer is polymerized in a first stage and a monomer to form a crystalline copolymer is polymerized in a second stage, or a monomer to form a crystalline copolymer is polymerized in a first stage and a monomer to form an elastic copolymer is polymerized in a second stage, to obtain a graft copolymer. The graft copolymer is a so-called thermoplastic elastomer, and is not suitable for blow molding or inflation molding.

Patent Document 1: JP-A-2002-12626
Patent Document 2: JP-B-62-34324

It is an object of the present invention to provide a thermoplastic fluororesin having a high melt tension and being excellent in blow moldability and inflation moldability.

The present invention provides a process for producing a thermoplastic fluororesin comprising a fluoropolymer having a branched structure, which comprises a step of polymerizing a monomer (A) having a radical generating group (x) which generates substantially no radical under first polymerization conditions and generates radicals under second polymerization conditions and having an addition polymerizable double bond, and a monomer (B), under the first polymerization conditions to produce a fluoropolymer (X), and a step of polymerizing a monomer (C) in the presence of the fluoropolymer (X) under the second polymerization conditions to form a fluoropolymer (Y) having a branched structure, wherein the monomer (B) comprises one or more monomers having an addition polymerizable double bond, at least one of the monomers having an addition polymerizable double bond being a fluoromonomer, and is such a monomer that a polymer of only the monomer (B) is a crystalline fluoropolymer; and the monomer (C) comprises one or more monomers having an addition polymerizable double bond, at least one of the monomers having an addition polymerizable double bond being a fluoromonomer, and is such a monomer that a polymer of only the monomer (C) is a crystalline fluoropolymer (provided that the monomer (C) may be the same as the monomer (B)), wherein the radical generating group (x) is capable of generating a radical by heat, and units having branched structure in the fluoropolymer (Y) are derived from the units of the monomer (A), wherein the decomposition temperature (Tx) of the radical generating group (x) as defined by a 10-hour half-life temperature is within a range of from 50°C to 200°C, and all the following conditions are met:

the polymerization temperature (T1) under the first polymerization conditions $\leq$ (the decomposition temperature (Tx) - 20°C),
the polymerization temperature (T2) under the second polymerization conditions > (the decomposition temperature (Tx) - 20°C), and
the polymerization temperature (T2) under the second polymerization conditions - the polymerization temperature (T1) under the first polymerization conditions $\geq$ 20°C, and
wherein the proportion of units of the monomer (A) in the fluoropolymer (X) is from 0.01 to 10 mol% based on all the monomer units in the fluoropolymer (X).

According to the present invention, a thermoplastic fluororesin having a high melt tension and being excellent in blow moldability and inflation moldability is obtained.

[1. Process for producing thermoplastic fluororesin]

(1-1) Thermoplastic fluororesin

The thermoplastic fluororesin to be obtained by the production process of the present invention means a fluororesin having thermoplasticity, containing a fluoropolymer (Y) having a branched structure. The thermoplastic fluororesin may contain, as described hereinafter, in addition to the fluoropolymer (Y) having a branched structure, a linear fluoropolymer having no branched structure (hereinafter this linear fluoropolymer will sometimes be referred to as a fluoropolymer (Z)) in some cases. In a case where the fluoropolymer (Y) and the fluoropolymer (Z) are composed of monomer units of substantially the same type with substantially the same compositional ratio, except for presence or absence of units having a branched structure, it is difficult to separate both the polymers and analyze them, because in the case of a conventional crystalline fluoropolymer having a high fluorine content, solvents in which such a polymer is soluble are limited, and such a polymer has a low solubility, and accordingly, it is very difficult to separate the fluoropolymer (Y) and the fluoropolymer (Z) from their mixture. Accordingly, characteristics of the thermoplastic fluororesin to be obtained by the production process of the present invention are characteristics of a mixture of both the fluoropolymers in some cases.

The "units having a branched structure" in the fluoropolymer (Y) mean units derived from the units of the monomer (A) in the fluoropolymer (X).

The units of the monomer (A) in the fluoropolymer (X) are changed to units having a branched structure in the fluoropolymer (Y) in such a manner that they are decomposed under the second polymerization conditions to form radicals, to which the monomer (C) is addition polymerized.

In a case where the monomer (A) is a compound having one addition polymerizable double bond, it is considered that when the units of the monomer (A) in the fluoropolymer (X) are decomposed under the second polymerization conditions, free radical species (the residue of the units of the monomer (A) separated from the polymer chain) are also formed, and the monomer (C) is polymerized to the free radical species as the polymerization initiation sites, whereby the fluoropolymer (Z) is formed.

In a case where the monomer (A) is a compound having two addition polymerizable double bonds, the fluoropolymer (X) to be formed is a crosslinked polymer, and it is considered that the units of the monomer (A) correspond to the crosslinking sites. It is considered that the crosslinked fluoropolymer (X) is decomposed under the second polymerization conditions, the crosslinking disappears and radicals are formed, whereby a new linear radical-containing fluoropolymer is formed, and the monomer (C) is addition polymerized to this fluoropolymer having radicals, whereby the fluoropolymer (Y) is formed.

In the present invention, the main chain is, in a case where the fluoropolymer (X) is a linear polymer, the fluoropolymer (X) (provided that the units of the monomer (A) are changed to units having a branched structure), and in a case where the fluoropolymer (X) is a crosslinked polymer, a newly formed linear fluoropolymer (X) moiety formed after the crosslinking disappeared.

The "fluoropolymer having a branched structure" means a fluoropolymer of a concept including a fluoropolymer having a graft polymer structure. A graft polymer usually means a polymer having a branched structure in which the monomer units of the polymer chain of the main chain and the monomer units of the polymer chains of the side chains are different from each other, however, in the fluoropolymer (Y) in the present invention, the monomer units of the polymer chains of the main chain and the side chains may be the same.

Each of the monomer (B) and the monomer (C) is such a monomer that a polymer of only the monomer is a crystalline fluoropolymer. Each of the monomer (B) and the monomer (C) may be a combination of two or more monomers. In such a case, depending on the copolymerization ratio of the two or more monomers, the copolymer may be a crystalline fluoropolymer or a non-crystalline fluoropolymer. For example, a copolymer of tetrafluoroethylene and a perfluoroalkyl vinyl ether is a crystalline copolymer in a case where the proportion of the perfluoroalkyl vinyl ether units is from 0.5 to 10 mol%, the crystallinity will be decreased as the proportion of the perfluoroalkyl vinyl ether units further increases, and when the proportion exceeds about 15 mol%, the copolymer will be a non-crystalline copolymer. In such a case, each of the monomer (B) and the monomer (C) in the present invention is a combination of two or more monomers in such a proportion that a crystalline fluoropolymer is obtained. Each of the polymer of the monomer (B) and the polymer of the monomer (C) is preferably a crystalline fluoropolymer having a melting point within a range of from 150°C to 340°C.

Usually, the proportions of the respective monomer units in the fluoropolymer do not necessarily agree with the employed proportions of the respective monomers used for the production of such a polymer (which are also called the charged proportions). The polymerization reactivities of the respective monomers vary, and therefore, a monomer having a low polymerization reactivity is used usually in a proportion larger than the desired proportion of the units of such a monomer in the obtainable polymer (the excess will be an unreacted monomer). The proportion of each monomer units in the present invention means the proportion of monomer units calculated by measuring a fluoropolymer or a thermoplastic fluororesin obtained.

(1-2) Component

Now, components to be used in the process for producing a thermoplastic fluororesin of the present invention will be described.

(Monomer (A))

The number of polymerizable double bonds in the monomer (A) is preferably one or two, and in the case of two, preferred is one having a radical generating group sandwiched between the two double bonds. The number of the polymerizable double bonds in the monomer (A) is preferably one, and in a case where the monomer (A) having two polymerizable double bonds is used, it is used preferably in a small amount as compared with the monomer (A) having one polymerizable double bond.

The radical generating group (x) in the monomer (A) is a group capable of generating a radical by heat, preferably a peroxy group. The radical generating group (x) generates substantially no radical under the first polymerization conditions. "Generates substantially no radical" means that no radical is generated at all, or even if it is generated, its amount is very small, and as a result, no polymerization takes place, or even if polymerization takes place, physical properties of the thermoplastic fluororesin are not influenced.

The radical generating group (x) is such that the decomposition temperature (Tx) of the radical generating group (x) as defined by a 10-hour half-life temperature is within a range of from 50°C to 200°C, preferably from 70°C to 150°C. The polymerization temperatures under the first polymerization conditions and the second polymerization conditions are adjusted by the decomposition temperature (Tx) of the radical generating group (x) of the selected monomer (A) as described hereinafter. Accordingly, in a case where the decomposition temperature (Tx) is too low, use of a polymerization initiator having a decomposition temperature lower than the decomposition temperature (Tx) is required to carry out polymerization under the first polymerization conditions and thus the first polymerization conditions are strictly limited. Further, if the decomposition temperature (Tx) is too high, the polymerization temperature under the second polymerization conditions is too high, and the second polymerization conditions are strictly limited.

The monomer (A) may, for example, be an ester of an alkyl hydroperoxide and an unsaturated carboxylic acid; an alkenyl carbonate of an alkyl hydroperoxide; a diacyl peroxide having an unsaturated acyl group, a dialkenyl hydroperoxide; or a dialkenyl dicarbonate. Among them, preferred is an ester of an alkyl hydroperoxide and an unsaturated carboxylic acid or an alkenyl carbonate of an alkyl hydroperoxide.

Further, the alkyl hydroperoxide is preferably t-butyl hydroperoxide, and the unsaturated carboxylic acid is preferably methacrylic acid, acrylic acid, crotonic acid, maleic acid or the like. Further, the alkenyl group is preferably a vinyl group or an allyl group. The monomer (A) may, for example, be specifically t-butyl peroxymethacrylate, t-butyl peroxycrotonate, t-butyl peroxymaleic acid or t-butyl peroxyallylcarbonate.

The proportion of the units of the monomer (A) to all monomer units in the fluoropolymer (X) is from 0.01 to 10 mol%. Particularly in order that a thermoplastic fluororesin to be obtained may have a sufficiently improved melt tension without significantly changing its characteristics as compared with characteristics of a conventional corresponding thermoplastic fluororesin, in a case where the monomer (A) having one polymerizable double bond is used, the proportion of its units is preferably from 0.01 to 5 mol%. Further, in a case where the monomer (A) having two polymerizable double bonds is used, the proportion of its units is preferably from 0.01 to 1 mol%. If the proportion of the units of the monomer (A) is smaller than the above range, substantially no effect of improving the melt tension of a thermoplastic fluororesin to be obtained is obtained, and if exceeds this range, the melt viscosity will be high, and molding tends to be difficult.

(Monomer (B) and monomer (C))

Each of the monomer (B) and the monomer (C) comprises one monomer or a combination of two or more monomers, at least one monomer being a fluoromonomer. The monomer (B) and the monomer (C) will generically be referred to as a monomer (B/C). In a case where the monomer (B/C) comprises a combination of two or more monomers, at least one monomer is a fluoromonomer, and the other monomer may be a monomer having no fluorine atom (hereinafter referred to as a non-fluoromonomer). In a case where the monomer (B/C) comprises a combination of at least one fluoromonomer and at least one non-fluoromonomer, the proportion of the entire fluoromonomer (it means the proportion of the monomer incorporated as monomer units in the polymer, not the proportion of the monomer used for preparation of the polymer) is preferably at least 10 mol%, more preferably at least 30 mol% to all monomers (B/C). In a case where the monomer (B/C) comprises a combination of two or more monomers, all the monomers may be a fluoromonomer.

Further, the monomer (B/C) preferably comprises only compounds having one polymerizable double bond, but in some cases, a compound having two or more polymerizable double bonds may be used in a very small amount (preferably less than 1 mol%) to all monomers.

The fluoromonomer is preferably tetrafluoroethylene, chlorotrifluoroethylene, vinylidene fluoride, trifluoroethylene, hexafluoropropylene or the like, particularly preferably tetrafluoroethylene or chlorotrifluoroethylene.

In addition, as a fluoromonomer to be used in combination with any of the above, a fluorinated alkenyl ether monomer or a fluorinated olefin monomer having at least 4 carbon atoms may, for example, be mentioned. For example, a fluorinated alkenyl ether monomer such as a perfluoro(alkyl vinyl ether), a (perfluoroalkyl) vinyl ether or an alkyl trifluorovinyl ether or a fluorinated olefin monomer such as a (perfluoroalkyl) substituted ethylene, an alkyl substituted trifluoroethylene or $CH_2=CF-(CF_2)_n$-H (n is an integer of from 2 to 6) may be mentioned. The perfluoroalkyl group or the alkyl group in such compounds is preferably one having from 1 to 6 carbon atoms. The alkenyl group may be a vinyl group or an allyl group or an isopropenyl group.

The non-fluoromonomer may, for example, be an olefin such as ethylene, propylene or butene; a vinyl ether such as methyl vinyl ether, ethyl vinyl ether, propynyl vinyl ether, chloroethyl vinyl ether, hydroxybutyl vinyl ether, cyclohexyl vinyl ether or glycidyl vinyl ether; an allyl compound such as allyl alcohol or allyl glycidyl vinyl ether, a vinyl ether such as vinyl acetate, vinyl pivalate, vinyl butyrate or vinyl chloroacetate; an acrylic acid derivative or methacrylic acid derivative such as acrylic acid, methacrylic acid, methyl acrylate or methyl methacrylate; or a maleic acid derivative such as maleic acid, maleic anhydride or a maleate. A particularly preferred non-fluoromonomer is an olefin having at most 4 carbon atoms.

(Thermoplastic fluororesin)

The thermoplastic fluororesin to be obtained by the production process of the present invention is preferably a thermoplastic fluororesin having a monomer unit composition (excluding the units of the monomer (A)) similar to those of various thermoplastic fluororesins. Typical thermoplastic fluororesins may, for example, be a ETFE resin (a resin comprising an ethylene/tetrafluoroethylene copolymer), a FEP resin (a resin comprising a tetrafluoroethylene/hexafluoropropylene copolymer), a PFA resin (a resin comprising a tetrafluoroethylene/perfluoroalkyl vinyl ether copolymer), a CTFE resin (a resin comprising a chlorotrifluoroethylene polymer), and an ECTFE resin (a resin comprising an ethylene/chlorotrifluoroethylene copolymer). The thermoplastic fluororesin to be obtained by the production process of the present invention is preferably a thermoplastic fluororesin having a monomer unit composition (excluding the units of the monomer (A)) similar to those of such fluororesins.

The monomer unit compositions (excluding the units of the monomer (A)) of the main chain and the side chains of the fluoropolymer (Y) may be different or may be substantially the same. That is, the types of the units of the monomer (B) and the units of the monomer (C) in the fluoropolymer (Y) may be different or may be substantially the same. Particularly, the types of the units of the monomer (B) and the units of the monomer (C) in the fluoropolymer (Y) are preferably substantially the same. The types of the units of the monomers being substantially the same means that monomer species in the same category as the ETFE resin, the FEP resin and the like exemplified as the above typical thermoplastic fluororesins are used. That is, it means that the fluoropolymer (Y) may have minor monomer units which do not greatly influence basic physical properties. Further, the types and the compositional ratio of the units of the monomer (B) and the units of the monomer (C) are preferably substantially the same as the types and the compositional ratio of the units of the monomers of the polymer in the above respective thermoplastic fluororesins. The compositional ratio being substantially the same means that one having a slightly changed compositional ratio is included so long as it is in the same category as the ETFE resin, the FEP resin and the like exemplified as the above respective thermoplastic fluororesins.

The thermoplastic fluororesin in the present invention is a thermoplastic fluororesin having its melt tension improved to be suitable for blow molding or inflation molding while various characteristics of a conventional thermoplastic fluororesin are maintained.

The thermoplastic fluororesin in the present invention is particularly preferably a thermoplastic fluororesin which can be considered as an ETFE resin having improved melt tension. Accordingly, specifically, explanation is made with reference to an ETFE resin as an example.

In the thermoplastic fluororesin which can be considered as the above improved ETFE resin to be obtained by the production process of the present invention, it is preferred that each of the monomer (B) and the monomer (C) comprises a combination of ethylene and tetrafluoroethylene, the compositional ratio of ethylene units and tetrafluoroethylene units (the compositional ratio of both units excluding the units of the monomer (A)) in the main chain (the chain of units of the monomer (B)) is substantially the same as that of the side chains (the chain of units of the monomer (C)) in the fluoropolymer (Y). In the thermoplastic fluororesin to be obtained in the present invention, the proportion of tetrafluoroethylene units is preferably from 30 to 70 mol%, and the proportion of ethylene units is preferably from 70 to 30 mol%, and these proportions are preferably from 40 to 60 mol% and from 60 to 40 mol%, respectively, based on the total of the tetrafluoroethylene units and the ethylene units in the fluoropolymer (the fluoropolymer (Y), including the fluoropolymer (Z) as the case requires).

An ethylene/tetrafluoroethylene copolymer which is commercially available as an ETFE resin usually has tetrafluoroethylene units and ethylene units and in addition, units of other copolymerizable monomer in a small amount. Accordingly, the fluoropolymer (Y) preferably similarly has units of other copolymerizable monomer. Such other copolymerizable monomer is preferably the above-described fluorinated olefin monomer such as a (perfluoroalkyl) substituted ethylene or $CH_2=CF-(CF_2)_n$-H. In the fluoropolymer (Y), the above-described units of other copolymerizable monomer are not essential, but in order to reduce stress cracking of the ETFE resin, the fluoropolymer (Y) preferably has a small amount of units of other copolymerizable monomer. In the thermoplastic fluororesin to be obtained by the present invention, in the fluoropolymer, the proportion of the tetrafluoroethylene units is preferably from 30 to 70 mol%, the proportion of the ethylene units is preferably from 70 to 30 mol%, and the proportion of the units of other copolymerizable monomer is preferably from more than 0 mol% to 10 mol%, based on the total of the tetrafluoroethylene units, the ethylene units and units of other copolymerizable monomer. Further, it is particularly preferred that the proportion of the tetrafluoroethylene units is from 40 to 60 mol%, the proportion of the ethylene units is from 60 to 40 mol%, and the proportion of the units of other copolymerizable monomer is from 0.1 to 5 mol%.

In order to produce the above-described thermoplastic fluororesin, the proportions of the tetrafluoroethylene units, the ethylene units and the units of other copolymerizable monomer derived from the monomer (B), and the proportions of the tetrafluoroethylene units, the ethylene units and the units of other copolymerizable monomer derived from the monomer (C), are preferably within the above ranges. The compositional ratio (excluding the units of the monomer (A)) of the respective units derived from the monomer (B) and the compositional ratio of the respective units derived from the monomer (C) are preferably substantially the same, but may be somewhat different. In the fluoropolymer (X) to be firstly produced in the present invention, it is preferred that the proportion of the tetrafluoroethylene units is from 30 to 70 mol%, the proportion of the ethylene units is from 70 to 30 mol% and the proportion of the units of other copolymerizable monomer is from more than 0 mol% to 10 mol% based on the total of the tetrafluoroethylene units, the ethylene units and the units of other copolymerizable monomer. Further, it is particularly preferred that the proportion of the tetrafluoroethylene units is from 40 to 60 mol%, the proportion of the ethylene units is from 60 to 40 mol%, and the proportion of the units of other copolymerizable monomer is from 0.1 to 5 mol%.

Then, it is considered that by using the monomer (C) having a charge composition by which polymer chains having the proportions the same as the proportions of the monomer units and carrying out polymerization under the second polymerization conditions, the fluoropolymer (Y) having the above monomer unit composition is formed. Also in a case where it is considered that the fluoropolymer (Z) is formed, the compositional ratio of the respective monomer units in the fluoropolymer (Z) is considered to be the same compositional ratio of the respective monomer units as the polymer chains of the side chains (polymer chains formed from the monomer (C)) of the fluoropolymer (Y).

The molecular weight of the thermoplastic fluororesin in the present invention is preferably within a range where various molding methods may be employed.

In the present invention, as an index corresponding to the molecular weight, the volume flow rate is measured and evaluated. Particularly, the volume flow rate of the thermoplastic fluororesin at 297°C is preferably from 0.1 to 30 $mm^3$/sec, more preferably from 1 to 20 $mm^3$/sec, as measured by a Koka type flow tester (the measurement method will be described hereinafter).

In the same manner as the above described improved ETFE resin, the same improved resins of other thermoplastic fluororesins can be obtained. For example, a FEP resin having an improved melt tension is preferably a tetrafluoroethylene/hexafluoropropylene copolymer comprising from 5 to 15 mol% of hexafluoropropylene units based on the total of tetrafluoroethylene units and the hexafluoropropylene units. A PFA resin having an improved melt tension is preferably a tetrafluoroethylene/perfluoro(alkyl vinyl ether) copolymer comprising from 0.5 to 10 mol% of perfluoro(alkyl vinyl ether) units based on the total of tetrafluoroethylene units and the perfluoro(alkyl vinyl ether) units.

(1-3) Polymerization method

The process for producing a thermoplastic fluororesin of the present invention comprises a step (a) of polymerizing a monomer (A) having a radical generating group (x) which generates substantially no radical under first polymerization conditions and generates radicals under second polymerization condition and having an addition polymerizable double bond, and a monomer (B), under the first polymerization conditions to produce a fluoropolymer (X), and a step (b) of polymerizing a monomer (C) in the presence of the fluoropolymer (X) under the second polymerization conditions to form a fluoropolymer (Y) having a branched structure.

In order that the radical generating group (x) of the monomer (A) may not substantially be decomposed at the polymerization temperature (hereinafter referred to as T1) under the first polymerization conditions in the step (a), T1 is at most (Tx-20°C). In order that the radical generating groups (x) in the units of the monomer (A) may be decomposed to generate radicals at the polymerization temperature (hereinafter referred to as T2) under the second polymerization conditions in the step (b), T2 is more than (Tx-20°C). In a case where T1 and T2 are close to each other, the temperature adjustment may be difficult, and accordingly the difference (T2-T1) between both temperatures is at least 20°C. That is, it is that all the following conditions (1) to (3) are met. Here, Tx is the decomposition temperature of the radical generating group.

(1) the polymerization temperature (T1) under the first polymerization conditions≦(the decomposition temperature (Tx) - 20°C),
(2) the polymerization temperature (T2) under the second polymerization conditions >(the decomposition temperature (Tx) - 20°C), and
(3) the polymerization temperature (T2) under the second polymerization conditions - the polymerization temperature (T1) under the first polymerization conditions≧20°C.

Since the decomposition temperature (Tx) of the radical generating group (x) of the monomer (A) is particularly preferably within a range of from 70°C to 150°C as described above, T1 is preferably the polymerization temperature under the above condition (1) which is at most 150°C. On the other hand, T1 is preferably at least 40°C from such reasons that if T1 is too low, the polymerization reactivity will not be sufficient, and the decomposition temperature of a polymerization initiator to carry out polymerization at T1 tends to be low, and its handling will be complicated. If T1 is low, the above condition (1) may not be met as the case requires.

In order that the monomer (A) and the monomer (B) may be copolymerized under the first polymerization conditions in the step (a), it is preferred to use, as a polymerization initiator, a radical initiator which generates radicals under the polymerization conditions. As such a radical generator, a known compound such as a radical generator used for production of a conventional thermoplastic fluororesin may be used. The 10-hour half-life temperature of this radical generator is preferably lower than T1.

The polymerization method in the steps (a) and (b) is not particularly limited, and a method such as bulk polymerization, solution polymerization, emulsion polymerization or suspension polymerization may be employed. In the case of the solution polymerization, as the polymerization medium, a hydrofluorocarbon, a chlorofluorocarbon, a hydrochlorofluorocarbon, an alcohol or a hydrocarbon may, for example, be used. In the case of the suspension polymerization, one having water added to a medium such as a hydrofluorocarbon, a chlorofluorocarbon, a hydrochlorofluorocarbon or a hydrocarbon, is used as the polymerization medium. In the case of the emulsion polymerization, water is used as the polymerization medium, but a polymerization medium similar to one used for the solution polymerization may be used in combination.

The polymerization pressure under the first polymerization conditions and the second polymerization conditions is preferably within a range of from 0.01 MPa to 10 MPa, particularly preferably within a range of from 0.1 MPa to 3 MPa. From 0.5 MPa to 3 MPa is particularly preferred as the first polymerization conditions, and from 0.5 MPa to 2 MPa is particularly preferred as the second polymerization conditions. Further, the temperature in the polymerization vessel may be adjusted by preliminarily cooling or heating the inside of the polymerization vessel at the time of charging the monomer, so as to meet the above temperature conditions (1) to (3). The polymerization time is determined depending upon the polymerization temperature. However, the polymerization time under the first polymerization conditions and the second polymerization conditions is in either case, preferably from 30 minutes to 15 hours.

According to the process for producing a thermoplastic fluororesin of the present invention, a crystalline thermoplastic fluororesin having a high melt tension, having a not high melt viscosity, can be obtained. Accordingly, even if the parison is pulled downwardly by its own weight during the blow molding, the upper parison will not be stretched, and the wall thickness of such a portion will not become thin, whereby the wall thickness of the molded product will not be non-uniform. Especially when a large sized molded product is formed by blow molding, the wall thickness reduction phenomenon will not result. The "large sized molded product" is not particularly limited, but it may, for example, be a hollow molded product having such a size that the maximum inner diameter is at least 200 mm and less than 1,000 mm.

Further, there will be non-uniformity in the thickness of a film to be formed by the inflation molding. Further, the melt viscosity of the resin will not increase during the molding, whereby the moldability of the resin at the time of extruding a parison will not decrease, and the productivity will be improved.

The thermoplastic fluororesin obtained by the production process of the present invention has a ratio (X/W) of its melt tension (XmN) to a load (Wkg) applied for the measurement of the melt tension being at least 0.8, preferably at least 1.5, as an index for the moldability for the molded product. When "X/W" is at least 0.8, the moldability and the productivity will be excellent at the time of carrying out the blow molding or the inflation molding. The upper limit is not particularly limited and is preferably about 5. The method for measuring the melt tension will be described later in Examples in detail.

With the above-described properties, the thermoplastic fluororesin obtainable by the production process of the present invention is useful for the production of a bottle, particularly a large sized bottle for storage of a reagent, or a film.

[2. Thermoplastic fluororesin]

The thermoplastic fluororesin of the present invention is a thermoplastic fluororesin which comprises a fluorocopolymer having tetrafluoroethylene units, ethylene units and optionally units of other copolymerizable monomer, and the proportion of the tetrafluoroethylene units being from 30 to 70 mol%, preferably from 40 to 60 mol%, the proportion of the ethylene units being from 70 to 30 mol%, preferably from 60 to 40 mol%, and the proportion of units of other copolymerizable monomer being from 0 to 10 mol%, preferably from 0.1 to 5 mol%, based on the total of the tetrafluoroethylene units, the ethylene units and the units of other copolymerizable monomer; and which has a ratio (X/W) of its melt tension (XmN) to a load (Wkg) applied for the measurement of the melt tension being at least 0.8. "X/W" in the thermoplastic fluororesin is preferably at least 1.5.

"Other copolymerizable monomer" means a monomer other than the monomer (A). For example, in the case of a combination of tetrafluoroethylene, ethylene and "other copolymerizable monomer", said "other copolymerizable monomer" means a monomer which is not tetrafluoroethylene nor ethylene, and is other than the monomer (A).

The thermoplastic fluororesin of the present invention is a thermoplastic fluororesin obtained by the above-described production process. In a case where the above-described production process is employed, as described in the above "Process for producing thermoplastic fluororesin", the thermoplastic fluororesin may be a mixture of fluoropolymers differing in the structure in some cases.

Further, as described in the above "Process for producing thermoplastic fluororesin", the thermoplastic fluororesin is more preferably such that at least part of the fluorocopolymer further has units having a branched structure, and in the thermoplastic fluororesin containing such a fluorocopolymer, the proportion of the units having a branched structure is from 0.01 to 10 mol% based on the total of the units having a branched structure, the tetrafluoroethylene units, the ethylene units and the units of other copolymerizable monomer.

As described above, the thermoplastic fluororesin of the present invention has a high melt tension and thus is excellent in blow moldability and inflation moldability. Further, it has a small melt viscosity and thus is excellent also in the productivity.

EXAMPLES

Now, the present invention will be described in detail with reference to Examples, but it should be understood that the present invention is by no means thereby restricted.

The compositional ratio of units derived from tetrafluoroethylene (hereinafter referred to as TFE units), units derived from ethylene (hereinafter referred to as E units) and units derived from perfluoroethylene in the fluoropolymer was determined by a fluorine elemental analysis and $^{19}$F-NMR.

Further, the proportion of units derived from t-butyl peroxyallylcarbonate (hereinafter referred to as carbonate units) in the fluoropolymer produced under the first polymerization conditions was determined by quantitative analysis of carbonate groups by FT-IR method (Fourier transform infrared spectroscopy). That is, the molar absorption coefficient of the carbonate group of t-butyl peroxyallylcarbonate at 1,797 cm$^{-1}$, determined by transmission IR using a liquid cell (BaF$_2$), was 14,000 L·mol$^{-1}$ cm$^{-1}$.

Then, using the above molar absorption coefficient, the concentration C (mol/l) of t-butyl peroxyallylcarbonate was determined. Further, assuming the specific gravity of the polymer being 1.8, the carbonate units were determined, where the total of the TFE units and the E units determined by the fluorine elemental analysis and the $^{19}$F-melt NMR was 100. For example, in a case where the TFE units/E units = 54/46, X represented by the mol fraction 54/46/X can be determined from the following formula.

$$X=(C/(1.8×1,000/(100×0.54+28×0.46)))×100$$

EXAMPLE 1

Into a 1 L pressure vessel equipped with a stirred, after deaeration, 654.5 g of perfluoropentyl difluoromethane (hereinafter referred to as C6H), 353.5 g of 1,1,2,2,3-pentafluoro-1,3-dichloropropane (hereinafter referred to as 225cb), 1.7 g of t-butyl peroxyallylcarbonate (10-hour half-life temperature: 100°C), 107.5 g of tetrafluoroethylene (hereinafter referred to as TFE) and 43 g of a mixed gas (TFE/ethylene=54/46 molar ratio) were charged at room temperature. Then, the temperature was raised to 66°C, and 1 ml of a 1 mass% solution (solvent: C6H) of t-butyl peroxypivalate (10-hour half-life temperature: 55°C) was charged to initiate polymerization. As the polymerization proceeds, the pressure will decrease. Therefore, in order to maintain the pressure to be constant, the mixed gas was continuously post-charged. When the amount of the mixed gas post-charged became 60 g, the internal temperature was cooled to room temperature, an unreacted gas was discharged, and the pressure vessel was opened. The content in the pressure vessel was washed with C6H and subjected to filtration by a glass filter to obtain a fluoropolymer in the form of a slurry. The copolymer was stored in a slurry state. The mass of the slurry was 700 g. Part of the slurry was dried, and the compositional ratio (mol) of the polymer was measured, whereby TFE units/E units = 53.5/46.5. Further, the proportion of carbonate units was 0.73 mol based on the total of the TFE units and the E units.

Then, 140 g of the obtained fluoropolymer slurry, 73.6 g of C6H and 10 g of 225cb were charged into a 200 ml pressure vessel equipped with a stirrer, and after deaeration, 7.2 g of TFE and 2.9 g of a mixed gas (TFE/ethylene = 54/46 molar ratio) were charged.

Then, nitrogen was blown until the pressure at room temperature became double. Then, the temperature was raised to 120°C to initiate polymerization. As the polymerization proceeds, the pressure will decrease. Therefore, in order to maintain the pressure to be constant, the mixed gas was continuously post-charged. When the amount of the mixed gas post-charged became 15 g, the internal temperature was cooled to room temperature, and an unreacted gas was discharged. The content in the pressure vessel was washed with 225cb and subjected to filtration by a glass filter to obtain a fluoropolymer having a branched structure in the form of a slurry. The obtained slurry was vacuum dried at 60°C for 12 hours to obtain 30 g of a white fluoropolymer having a branched structure. The compositional ratio of the fluoropolymer was such that TFE units/E units = 56.5/46.5.

The volume flow rate, melting point, melt tension, of the copolymer were measured by the methods as described hereinafter. As a result, the above copolymer had a volume flow rate (Q value) of 5 (mm$^3$/sec) and a melting point of 265°C. The melt tension, are shown, as summarized, in Table 1.

(MEASURING METHODS)

Volume flow rate (Q value): Using a Koka type flow tester, the volume of the copolymer flowing out in unit time (mm$^3$/sec) from a nozzle having a diameter of 2.095 mm and a length of 8 mm at 297°C under a load of 7 kg/cM$^2$ was measured.

Melting point: Using SII DSC6220 model differential scanning calorimeter (manufactured by Seiko Denshi K.K.), the temperature was raised at a rate of 10°C/min, whereby the melting peak was taken as the melting point.

Melt tension (unit: mN): Using Capirograph (manufactured by Toyo Seiki Seisaku-sho, LTD.), a capillary die having a diameter of 1 mm and a length of 10 mm was used at an inflow angle of 90°. The fluoropolymer having a branched structure was subjected to press molding at 300°C to prepare a sheet having a thickness of 1 mm, and the sheet was finely cut to a size of about 5 mm square, 5 g of which was introduced into a barrel set at 330°C. Then, a piston was inserted from above and left to stand for 5 minutes until the copolymer melted and the barrel temperature was stabilized at 330°C. Then, the piston was descended at a rate of 5 mm/min, and after waiting until the load applied to the piston became constant and when the load (Wkg) became constant, the take-off speed of a take-off device was adjusted to be 2 m/min, and a strand of the copolymer flowing out from the die was slowly led to the take-off device so that it would not be broken, whereby the strand was withdrawn. The withdrawing strength applied at that time was measured for one minute, and the averaged withdrawing strength was taken as the melt tension (XmN).

COMPARATIVE EXAMPLE 1

Into a 1 L pressure vessel equipped with a stirrer, after deaeration, 683.9 g of C6H, 252.9 g of 225cb, 88.5 g of TFE and 37 g of a mixed gas (TFE/ethylene=54/46 molar ratio) were charged. Then, the temperature was raised to 66°C, and 1 ml of a 1 mass% solution (solvent: C6H) of t-butyl peroxypivalate was charged to initiate polymerization. As the polymerization proceeds, the pressure decreases. Therefore, in order to maintain the pressure to be constant, the mixed gas was continuously post-charged. When the amount of the mixed gas post-charged became 50 g, the internal temperature was cooled to room temperature, an unreacted gas was discharged, and the pressure vessel was opened. The content of the pressure vessel was washed with 225cb and subjected to filtration by a glass filter to obtain a copolymer in the form of a slurry. The obtained slurry was vacuum-dried at 60°C for 12 hours to obtain 58.7 g of a white copolymer.

The volume flow rate, melting point, melt tension, of the copolymer were measured in the same manner as in Example 1, whereby the volume flow rate (Q value) was 13 (mm$^3$/sec), and the melting point was 277°C. The melt tension, are shown, as summarized, in Table 1.

EXAMPLE 2

Into a 1 L pressure vessel equipped with a stirrer, after deaeration, 654.5 g of C6H, 353.5 g of 225cb, 1.7 g of t-butyl peroxyallylcarbonate, 107.5 g of TFE, 43 g of a mixed gas (TFE/ethylene = 54/46 molar ratio) and 4.92 g of a perfluorobutyl ethylene (hereinafter referred to as PFBE) were charged. Then, the temperature was raised to 66°C, and 1 ml of a 1 mass% solution (solvent: C6H) of t-butyl peroxypivalate was charge to initiate polymerization. As the polymerization proceeds, the pressure will decrease. Therefore, in order to maintain the pressure to be constant, the mixed gas was continuously post-charged. When the amount of the mixed gas post-charged became 60 g, the internal temperature was cooled to room temperature, an unreacted gas was discharged, and the pressure vessel was opened. The content in the pressure vessel was washed with C6H and subjected to filtration by a glass filter to obtain a fluoropolymer in the form of a slurry. The fluoropolymer was stored in a slurry state. The mass of the slurry was 700 g. Part of the slurry was dried, and the compositional ratio (mol) in the polymer was measured, whereby TFE units/E units/PFBE units/carbonate units = 52.55/46.16/1.11/0.68.

Then, 140 g of the obtained fluoropolymer slurry, 73.6 g of C6H and 10 g of 225cb were charged into a 200 ml pressure vessel equipped with a stirrer, and after deaeration, 7.2 g of TFE, 2.9 g of a mixed gas (TFE/ethylene = 54/46 molar ratio) and 0.39 g of PFBE were charged. Then, nitrogen was blown to make the pressure in the vessel double than before nitrogen was blown. Then, the temperature was raised to 120°C to initiate polymerization. As the polymerization proceeds, the pressure will decrease. Therefore, in order to maintain the pressure to be constant, the mixed gas was continuously post-charged. When the amount of the mixed gas post-charged became 15 g, the internal temperature was cooled to room temperature, and an unreacted gas was discharged. The content in the pressure vessel was washed with 225cb and subjected to filtration by a glass filter to obtain a fluoropolymer having a branched structure in the form of a slurry. The obtained slurry was vacuum dried at 60°C for 12 hours to obtain 31 g of a white fluoropolymer having a branched structure. The compositional ratio of the fluoropolymer was such that TFE units/E units/PFBE units = 54.2/45.8/1.0. The volume flow rate, melting point, melt tension, of the fluoropolymer having a branched structure were measured in the same manner as in Example 1. As a result, the flow rate (Q value) was 3 (mm$^3$/sec), and the melting point was 255°C. The melt tension, are shown, as summarized, in Table 1.

COMPARATIVE EXAMPLE 2

Into a 1 L pressure vessel equipped with a stirrer, after deaeration, 683.9 g of C6H, 252.9 g of 225cb, 88.5 g of TFE, 37 g of a mixed gas (TFE/ethylene = 54/46 molar ratio) and 4.92 g of PFBE were charged. Then, the temperature was raised to 66°C, and 1 ml of a 1 mass% solution (solvent: C6H) of t-butyl peroxypivalate was charged to initiate polymerization. As the polymerization proceeds, the pressure will decrease. Therefore, in order to maintain the pressure to be constant, the mixed gas was continuously post-charged, and PFBE in an amount of 1.4 mol to 100 mol of the mixed gas was post-added. When the amount of the mixed gas post-charged became 50 g, the internal temperature was cooled to room temperature, an unreacted gas was discharged, and the pressure vessel was opened. The content in the pressure vessel was washed with 225cb and subjected to filtration by a glass filter to obtain a copolymer in the form of a slurry. The obtained slurry was vacuum dried at 60°C for 12 hours to obtain 62.0 g of a white copolymer. The volume flow rate, melting point, melt tension, of the copolymer were measured in the same manner as in Example 1, whereby the volume flow rate (Q value) was 10 (mm$^3$/sec), and the melting point was 260°C. The melt tension, are shown, as summarized, in Table 1.

When Examples 1 and 2 are compared with Comparative Examples 1 and 2, it is found that the melt tensions in the respective Examples are about twice.

TABLE 1

| Sample | Temperature | Piston speed | Load | Take-off speed | Melt tension | | | (X/W) |
|---|---|---|---|---|---|---|---|---|
| | | | | | Maximum | Minimum | Average | (Average melt tension/load) |
| | (°C) | (mm/min) | (kg) | (m/min) | (mN) | (mN) | (mN) | (mN/kg) |
| Ex. 1 | 330 | 5 | 9 | 2 | 15.7 | 15.4 | 15.6 | 1.7 |
| Comp. Ex. 1 | 330 | 5 | 20.9 | 2 | 8.2 | 7.9 | 8.1 | 0.4 |
| Ex. 2 | 330 | 5 | 8 | 2 | 17 | 16.7 | 16.9 | 2.1 |
| Comp. Ex. 2 | 330 | 5 | 18.9 | 2 | 6.1 | 5.9 | 6 | 0.3 |

The thermoplastic fluororesin obtained by the present invention has a high melt tension and is excellent in the blow moldability and the inflation moldability and thus is useful for production of a bottle, particularly a large-sized bottle for storage of a reagent, or a film.

The entire disclosure of Japanese Patent Application JP2008022971 filed on February 1, 2008.

**Claims**

1. A process for producing a thermoplastic fluororesin comprising a fluoropolymer (Y) having a branched structure, which comprises
a step of polymerizing a monomer (A) having a radical generating group (x) which generates substantially no radical under first polymerization conditions and generates radicals under second polymerization conditions and having an addition polymerizable double bond, and a monomer (B), under the first polymerization conditions to produce a fluoropolymer (X), and
a step of polymerizing a monomer (C) in the presence of the fluoropolymer (X) under the second polymerization conditions to form a fluoropolymer (Y) having a branched structure,
wherein the monomer (B) comprises one or more monomers having an addition polymerizable double bond, at least one of the monomers having an addition polymerizable double bond being a fluoromonomer, and is such a monomer that a polymer of only the monomer (B) is a crystalline fluoropolymer;
and the monomer (C) comprises one or more monomers having an addition polymerizable double bond, at least one of the monomers having an addition polymerizable double bond being a fluoromonomer, and is such a monomer that a polymer of only the monomer (C) is a crystalline fluoropolymer (provided that the monomer (C) may be the same as the monomer (B)) wherein the radical generating group (x) is capable of generating a radical by heat, and units having a branched structure in the fluoropolymer (Y) are derived from the units of the monomer (A),
wherein the decomposition temperature (Tx) of the radical generating group (x) as defined by a 10-hour half-life temperature is within a range of from 50°C to 200°C, and all the following conditions are met:

the polymerization temperature (T1) under the first polymerization conditions $\leq$ (the decomposition temperature (Tx) - 20°C),
the polymerization temperature (T2) under the second polymerization conditions > (the decomposition temperature (Tx) - 20°C), and
the polymerization temperature (T2) under the second polymerization conditions - the polymerization temperature (T1) under the first polymerization conditions $\geq$ 20°C, and

wherein the proportion of units of the monomer (A) in the fluoropolymer (X) is from 0.01 to 10 mol% based on all the monomer units in the fluoropolymer (X).

2. The process for producing a thermoplastic fluororesin according to Claim 1, wherein the monomer (B) comprises tetrafluoroethylene, ethylene and optionally other copolymerizable monomer; and the proportion of tetrafluoroethylene units is from 30 to 70 mol%, the proportion of ethylene units is from 70 to 30 mol%, and the proportion of units of other copolymerizable monomer is from 0 to 10 mol%, based on the total of the tetrafluoroethylene units, the ethylene units and the units of other copolymerizable monomer in the fluoropolymer (X).

3. The process for producing a thermoplastic fluororesin according to Claim 1 or 2, wherein the monomer (C) comprises tetrafluoroethylene, ethylene and optionally other copolymerizable monomer; and the proportion of tetrafluoroethylene units is from 30 to 70 mol%, the proportion of ethylene units is from 70 to 30 mol%, and the proportion of units of other copolymerizable monomer is from 0 to 10 mol%, based on the total of the tetrafluoroethylene units, the ethylene units and the units of other copolymerizable monomer in the fluoropolymer in the thermoplastic fluororesin.

4. The process for producing a thermoplastic fluororesin according to any one of Claims 1 to 3, wherein the thermoplastic fluororesin is a thermoplastic fluororesin having a ratio (X/W) of its melt tension (XmN) to a load (Wkg) applied for the measurement of the melt tension being at least 0.8.

**Patentansprüche**

1. Verfahren zur Herstellung eines thermoplastischen Fluorharzes, welches ein Fluorpolymer (Y) mit einer verzweigten Struktur umfasst, umfassend einen Schritt des Polymerisierens eines Monomers (A) mit einer radikalerzeugenden Gruppe (x), welche unter ersten Polymerisationsbedingungen im Wesentlichen kein Radikal erzeugt und unter zweiten Polymerisationsbedingungen Radikale erzeugt, und welches eine additionspolymerisierbare Doppelbindung aufweist, und eines Monomers (B) unter den ersten Polymerisationsbedingungen zur Herstellung eines Fluorpolymers (X) und

einen Schritt des Polymerisierens eines Monomers (C) in der Gegenwart des Fluorpolymers (X) unter den zweiten Polymerisationsbedingungen zur Bildung eines Fluorpolymers (Y) mit einer verzweigten Struktur,

wobei das Monomer (B) ein oder mehrere Monomere mit einer additionspolymerisierbaren Doppelbindung aufweist, mindestens eines der Monomere mit einer additionspolymerisierbaren Doppelbindung ein Fluormonomer ist und ein derartiges Monomer ist, dass ein Polymer, nur aus dem Monomer (B), ein kristallines Fluorpolymer ist,

und das Monomer (C) ein oder mehrere Monomere mit einer additionspolymerisierbaren Doppelbindung aufweist, mindestens eines der Monomere mit einer additionspolymerisierbaren Doppelbindung ein Fluormonomer ist und ein derartiges Monomer ist, dass ein Polymer, nur aus dem Monomer (C), ein kristallines Fluorpolymer ist (mit der Maßgabe, dass das Monomer (C) das gleiche wie das Monomer (B) sein kann),

wobei die radikalerzeugende Gruppe (x) fähig ist, ein Radikal durch Wärme zu erzeugen und Einheiten mit einer verzweigten Struktur im Fluorpolymer (Y) von den Einheiten des Monomers (A) abgeleitet sind,

wobei die Zersetzungstemperatur (Tx) der radikalerzeugende Gruppe (x), definiert als zehnstündige Halbwertstemperatur, innerhalb eines Bereichs von 50°C bis 200°C liegt und alle der folgenden Bedingungen erfüllt sind:

die Polymerisationstemperatur (T1) unter den ersten Polymerisationsbedingungen ≤ (die Zersetzungstemperatur (Tx) - 20°C),

die Polymerisationstemperatur (T2) unter den zweiten Polymerisationsbedingungen > (die Zersetzungstemperatur (Tx) - 20°C) und

die Polymerisatonstemperatur (T2) unter den zweiten Polymerisationsbedingungen - die Polymerisationstemperatur (T1) unter den ersten Polymerisationsbedingungen ≥ 20°C, und

wobei der Anteil von Einheiten des Monomers (A) im Fluorpolymer (X) 0,01 bis 10 Mol-%, bezogen auf alle Monomereinheiten im Fluorpolymer (X), beträgt.

2. Verfahren zur Herstellung eines thermoplastischen Fluorharzes nach Anspruch 1, wobei das Monomer (B) Tetrafluorethylen, Ethylen und gegebenenfalls anderes copolymerisierbares Monomer umfasst und der Anteil an Tetrafluorethyleneinheiten 30 bis 70 Mol-% beträgt, der Anteil an Ethyleneinheiten 70 bis 30 Mol-% beträgt und der Anteil an Einheiten anderen copolymerisierbaren Monomers 0 bis 10 Mol-% beträgt, bezogen auf die Summe der Tetrafluorethyleneinheiten, der Ethyleneinheiten und der Einheiten anderen copolymerisierbaren Monomers in dem Fluorpolymer (X).

3. Verfahren zur Herstellung eines thermoplastischen Fluorharzes nach Anspruch 1 oder 2, wobei das Monomer (C) Tetrafluorethylen, Ethylen und gegebenenfalls anderes copolymerisierbares Monomer umfasst und der Anteil an Tetrafluorethyleneinheiten 30 bis 70 Mol-% beträgt, der Anteil an Ethyleneinheiten 70 bis 30 Mol-% beträgt und der Anteil an Einheiten anderen copolymerisierbaren Monomers 0 bis 10 Mol-% beträgt, bezogen auf die Summe der Tetrafluorethyleneinheiten, der Ethyleneinheiten und der Einheiten anderen copolymerisierbaren Monomers in dem Fluorpolymer in dem thermoplastischen Fluorharz.

4. Verfahren zur Herstellung eines thermoplastischen Fluorharzes nach einem der Ansprüche 1 bis 3, wobei das thermoplastische Fluorharz ein thermoplastisches Fluorharz mit einem Verhältnis (X/W) seiner Schmelzspannung (XmN) zu einer Last (Wkg), die zur Messung der Schmelzspannung appliziert wird, mindestens 0,8 beträgt.

**Revendications**

1. Procédé pour produire une résine fluorée thermoplastique comprenant un polymère fluoré (Y) présentant une structure ramifiée, qui comprend

une étape de polymérisation d'un monomère (A) comportant un groupe générateur de radicaux (x) qui ne génère pratiquement pas de radical dans des premières conditions de polymérisation et qui génère des radicaux dans des deuxièmes conditions de polymérisation, et comportant une double liaison polymérisable par addition, et d'un monomère (B), dans les premières conditions de polymérisation, pour produire un polymère fluoré (X), et

une étape de polymérisation d'un monomère (C) en présence du polymère fluoré (X) dans les deuxièmes conditions de polymérisation pour former un polymère fluoré (Y) présentant une structure ramifiée,

dans lequel le monomère (B) comprend un ou plusieurs monomère(s) comportant une double liaison polymérisable par addition, au moins l'un des monomères comportant une double liaison polymérisable par addition étant un monomère fluoré, et est un monomère tel qu'un polymère uniquement du monomère (B) est un polymère fluoré cristallin ;

et le monomère (C) comprend un ou plusieurs monomère(s) comportant une double liaison polymérisable par addition, au moins l'un des monomères comportant une double liaison polymérisable par addition étant un monomère fluoré, et est un monomère tel qu'un polymère uniquement du monomère (C) est un polymère fluoré cristallin (à la condition que le monomère (C) puisse être le même que le monomère (B)),

dans lequel le groupe générateur de radicaux (x) est capable de générer un radical par application de chaleur, et des motifs présentant une structure ramifiée dans le polymère fluoré (Y) dérivent des motifs du monomère (A),

dans lequel la température de décomposition (Tx) du groupe générateur de radicaux (x), telle que définie par la température de demi-vie à 10 heures, est située dans la plage allant de 50°C à 200°C, et toutes les conditions suivantes sont satisfaites :

la température de décomposition (T1) dans les premières conditions de polymérisation est inférieure ou égale à la température de décomposition (Tx) - 20°C,

la température de décomposition (T2) dans les deuxièmes conditions de polymérisation est supérieure à la température de décomposition (Tx) - 20°C, et

la température de décomposition (T2) dans les deuxièmes conditions de polymérisation moins la température de décomposition (T1) dans les premières conditions de polymérisation est supérieure ou égale à 20°C, et dans lequel la proportion de motifs du monomère (A) dans le polymère fluoré (X) est de 0,01 à 10 % en moles par rapport à tous les motifs monomères dans le polymère fluoré (X).

2. Procédé pour produire une résine fluorée thermoplastique selon la revendication 1, dans lequel le monomère (B) comprend du tétrafluoroéthylène, de l'éthylène et éventuellement un autre monomère copolymérisable ; et la proportion de motifs tétrafluoroéthylène est de 30 à 70 % en moles, la proportion de motifs éthylène est de 70 à 30 % en moles, et la proportion de motifs de l'autre monomère copolymérisable est de 0 à 10% en moles, par rapport au total des motifs tétrafluoroéthylène, des motifs éthylène et des motifs de l'autre monomère copolymérisable dans le polymère fluoré (X).

3. Procédé pour produire une résine fluorée thermoplastique selon la revendication 1 ou 2, dans lequel le monomère (C) comprend du tétrafluoroéthylène, de l'éthylène et éventuellement un autre monomère copolymérisable ; et la proportion de motifs tétrafluoroéthylène est de 30 à 70 % en moles, la proportion de motifs éthylène est de 70 à 30 % en moles, et la proportion de motifs de l'autre monomère copolymérisable est de 0 à 10 % en moles, par rapport au total des motifs tétrafluoroéthylène, des motifs éthylène et des motifs de l'autre monomère copolymérisable dans le polymère fluoré dans la résine fluorée thermoplastique.

4. Procédé pour produire une résine fluorée thermoplastique selon l'une quelconque des revendications 1 à 3, dans lequel la résine fluorée thermoplastique est une résine fluorée thermoplastique ayant un rapport (X/W) de sa tension à l'état fondu (XmN) sur une charge (Wkg) appliquée pour la mesure de la tension à l'état fondu qui est d'au moins 0,8.

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002012626 A
- JP 62034324 B
- JP 2008022971 B